(19) Europäisches Patentamt
European Patent Office
Office européen des brevets

(11) **EP 4 786 203 A1**

(12) **EUROPEAN PATENT APPLICATION**
published in accordance with Art. 153(4) EPC

(43) Date of publication:
**05.08.2026   Bulletin 2026/32**

(21) Application number: 24872586.3

(22) Date of filing: **27.09.2024**

(51) International Patent Classification (IPC):
**B44C 1/165** (2006.01)   **B32B 7/022** (2019.01)
**B32B 27/40** (2006.01)   **C08J 7/04** (2020.01)

(52) Cooperative Patent Classification (CPC):
**B32B 7/022; B32B 27/40; B44C 1/165; C08J 7/04**

(86) International application number:
**PCT/JP2024/034843**

(87) International publication number:
**WO 2025/070807 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **29.09.2023   JP 2023170606**

(71) Applicant: **Sekisui Chemical Co., Ltd.
Osaka-shi, Osaka 530-8565 (JP)**

(72) Inventors:
• **TANAKA, Jun
Mishima-gun, Osaka 618-0021 (JP)**
• **NAKADATE, Junichi
Mishima-gun, Osaka 618-0021 (JP)**
• **HAYASHI, Hideki
Mishima-gun, Osaka 618-0021 (JP)**
• **SHICHIRI, Tokushige
Mishima-gun, Osaka 618-0021 (JP)**

(74) Representative: **Ter Meer Steinmeister & Partner
Patentanwälte mbB
Nymphenburger Straße 4
80335 München (DE)**

(54) **LAYERED SHEET, VEHICLE, METHOD FOR USING LAYERED SHEET, AND METHOD FOR MANUFACTURING LAYERED SHEET**

(57)     A laminated sheet (1) of the present invention has a transfer layer (10), and a coating layer (20) formed of a thermosetting resin composition or a moisture-curable resin composition, and the bending resistance of the transfer layer (10) is 20 to 120 mm. A vehicle of the present invention is coated with the laminated sheet of the present invention. The present invention can provide a laminated sheet that can suppress peeling marks from remaining on the coating layer when the transfer layer is peeled off and the coating layer is transferred to an adherend, and can also suppress formation of wrinkles on the laminated sheet when the laminated sheet is adhered to an adherend.

Fig. 1

EP 4 786 203 A1

## Description

Technical Field

The present invention relates to a laminated sheet used for coating, a vehicle coated by using the laminated sheet, a method of using the laminated sheet, and a method for producing the laminated sheet.

Background Art

Conventionally, coating has been applied to various products, such as furniture, steel sheets, and vehicle bodies, in order to impart functions such as aesthetic quality, durability, weather resistance, and scratch resistance. When products with three-dimensional shapes are industrially coated, it is common to apply the coating by spraying using air or electrostatic force. In the coating by spraying, substitution with decorative technologies using resin films is currently being examined from the viewpoints of loss generated during the coating, $CO_2$ emissions from factories, and the need for large-scale equipment investment.

The decorative technology is a technique for achieving high functionality and aesthetic quality through decoration by adhering a resin film (decorative film), which has text or patterns printed on the surface thereof with white, black, and color inks and the like, to the surface of a product in various fields, including consumer electronics, automotive interior parts, and miscellaneous goods. For example, PTL1 describes, as a decorative film, a thermosetting covering sheet that has spreadability and flexibility before curing, has excellent workability, and furthermore, is excellent in dispersibility for pigments and other additives, is easy to produce, and can form a uniform, high-hardness cured film when cured by heating. A supporting layer may also be provided on this thermosetting covering sheet, and after the thermosetting covering sheet is adhered to an object, the supporting layer is peeled off from the thermosetting covering sheet, and thereafter the thermosetting covering sheet is cured.

Citation List

Patent Literature

PTL1: JP 4-11680 A

Summary of Invention

Technical Problem

By adhering the thermosetting covering sheet to an adherend and subsequently peeling off the supporting layer, the thermosetting covering sheet can be transferred to the adherend, and thus, the supporting layer may be used as a transfer layer. In this process of transferring the thermosetting covering sheet to the adherend, it is necessary to peel off the transfer layer without damaging the surface of the thermosetting covering sheet. However, conventional thermosetting covering sheets have problems such as peeling marks remaining on the thermosetting covering sheet when the transfer layer is peeled, or wrinkles formed on the thermosetting covering sheet when the thermosetting covering sheet is adhered to an adherend.

Therefore, an object of the present invention is to provide a laminated sheet that can suppress peeling marks from remaining on a coating layer when a transfer layer is peeled off and the coating layer is transferred to an adherend, and can also suppress formation of wrinkles on the laminated sheet when the laminated sheet is adhered to an adherend, a vehicle coated by using the laminated sheet, a method of using the laminated sheet, and a method for producing the laminated sheet.

Solution to Problem

The present inventors have, as a result of intensive study, discovered that the aforementioned problems can be solved by adjusting the bending resistance of a transfer layer, and thus have accomplished the present invention. The gist of the present invention is as follows:

[1] A laminated sheet comprising a transfer layer, and a coating layer formed of a thermosetting resin composition or a moisture-curable resin composition, wherein bending resistance of the coating layer is 20 to 120 mm.
[2] The laminated sheet according to [1], wherein an elastic modulus of the coating layer measured from the transfer layer side is 1.0 to 1500 MPa.

**EP 4 786 203 A1**

[3] The laminated sheet according to [1] or [2], wherein the thermosetting resin composition contains a polymer component having a functional group reactive with an isocyanate group, and a thermally reactive isocyanate.

[4] The laminated sheet according to [3], wherein the polymer component having a functional group reactive with an isocyanate group has a hydroxyl group.

[5] The thermosetting resin sheet according to [3] or [4], wherein the polymer component having a functional group reactive with an isocyanate group is at least one resin selected from the group consisting of a (meth)acrylic resin, a polycarbonate resin, a polyester resin, and an epoxy resin.

[6] The laminated sheet according to any one of [3] to [5], wherein a weight average molecular weight of the polymer component having a functional group reactive with an isocyanate group is 50000 or more and 1000000 or less.

[7] The laminated sheet according to any one of [3] to [6], wherein a content of the polymer component having a functional group reactive with an isocyanate group in the thermosetting resin composition is 20% by mass or more and 90% by mass or less.

[8] The laminated sheet according to any one of [1] to [7], wherein the coating layer has a first resin layer composed of a first thermosetting resin composition, and a second resin layer composed of a second thermosetting resin composition,

the first thermosetting resin composition contains a first polymer component having a functional group reactive with an isocyanate group, and a first thermally reactive isocyanate, and
the second thermosetting resin composition contains a second polymer component having a functional group reactive with an isocyanate group, a second thermally reactive isocyanate, and a colorant.

[9] The laminated sheet according to [8], wherein a content of the first thermally reactive isocyanate in the thermosetting resin composition is 10% by mass or more and 70% by mass or less.

[10] The laminated sheet according to [1], wherein the moisture-curable resin composition contains a resin containing an isocyanate group.

[11] The laminated sheet according to [1] or [10], wherein the moisture-curable resin composition contains a polymer having a weight average molecular weight of 20000 or more and 1000000 or less.

[12] The laminated sheet according to any one of [1] to [11], wherein a thickness of the transfer layer is 10 $\mu$m or more and 1000 $\mu$m or less.

[13] A vehicle coated by using the laminated sheet according to any one of [1] to [12].

[14] A method of using a laminated sheet, wherein the laminated sheet according to any one of [1] to [12] is used to be adhered to an adherend.

[15] A method for producing a laminated sheet in which a coating layer is composed of a thermosetting resin composition, and the coating layer has a first resin layer and a second resin layer, the method comprising:

applying, to a transfer layer, a first coating material comprising a first thermosetting resin composition containing a first polymer component and a thermally reactive isocyanate, and drying the coating material to prepare a first laminate including the transfer layer, and the first resin layer composed of the first thermosetting resin composition that is provided on the transfer layer;
applying, to a substrate, a second coating material comprising a second thermosetting resin composition containing a second polymer component, a second thermally reactive isocyanate, and a colorant, and drying the coating material to prepare a second laminate including the substrate, and the second resin layer composed of the second thermosetting resin composition that is provided on the substrate; and
laminating the first laminate and the second laminate to each other in such a manner that the first resin layer and the second resin layer face each other.

Advantageous Effects of Invention

The present invention can provide a laminated sheet that can suppress peeling marks from remaining on a coating layer when a transfer layer is peeled off and the coating layer is transferred to an adherend, and can also suppress formation of wrinkles on the laminated sheet when the laminated sheet is adhered to an adherend, a vehicle coated by using the laminated sheet, a method of using the laminated sheet, and a method for producing the laminated sheet.

Brief Description of Drawings

[Fig. 1] Fig. 1 is a schematic cross-sectional view of a laminated sheet of one embodiment of the present invention.

[Fig. 2] Fig. 2 is a schematic cross-sectional view of a laminated sheet of another embodiment of the present invention.
[Fig. 3] Fig. 3 is a schematic cross-sectional view of a laminated sheet of another embodiment of the present invention.
[Fig. 4] Fig. 4 is a schematic cross-sectional view of a laminated sheet of still another embodiment of the present invention.

Description of Embodiments

[Thermosetting Resin Sheet]

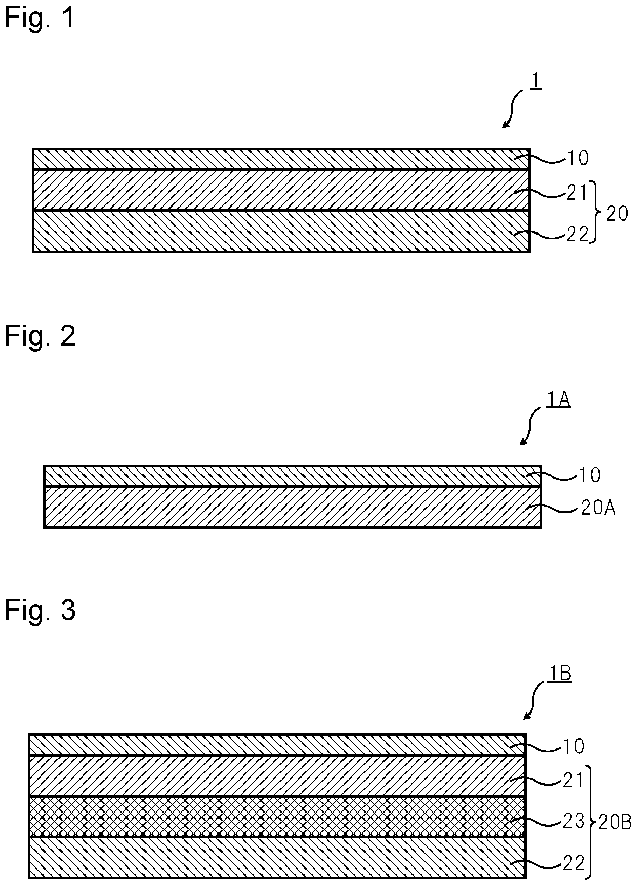

Referring to the accompanying drawing, a laminated sheet of one embodiment of the present invention will be described. As illustrated in Fig. 1, a laminated sheet 1 of one embodiment of the present invention includes a transfer layer 10 and a coating layer 20 in the stated order.

(Transfer Layer)

The transfer layer 10 of the laminated sheet 1 of the embodiment of the present invention has bending resistance of 20 to 120 mm. When the bending resistance of the transfer layer 10 is less than 20 mm, wrinkles may occur in the laminated sheet 1 when it is adhered to an adherend. Besides, when the bending resistance of the transfer layer 10 is less than 20 mm, in bonding the laminated sheet by pressure from above with a squeegee or the like, pressure may concentrate on the area touched by the squeegee, and hence crease may be caused in the laminated sheet. The crease may adhere as it is to the adherend discontinuously, which may cause wrinkles. Alternatively, when the bending resistance of the transfer layer 10 is larger than 120 mm, in peeling the transfer layer 10 off to transfer the coating layer 20 to the adherend, peeling marks may remain on the coating layer 20. From these points of view, the transfer layer 10 of the laminated sheet 1 of the embodiment of the present invention has bending resistance of preferably 30 to 110 mm, more preferably 40 to 100 mm, further preferably 50 to 90 mm, and still further preferably 60 to 80 mm. The bending resistance of the transfer layer 10 may be measured by a method described in Examples below. The bending resistance of the transfer layer 10 can be adjusted depending on a material of the transfer layer 10, the thickness of the transfer layer 10, and a draw ratio, crystallinity and the like of a resin film constituting the transfer layer 10. More specifically, a material for the transfer layer 10 with a higher glass transition temperature (Tg) can achieve higher bending resistance. Separately, the bending resistance of the transfer layer can also be increased by increasing the thickness of the transfer layer, the draw ratio and the crystallinity of the transfer layer. Thus, even when a softer material is used for the transfer layer, the bending resistance can still be adjusted by increasing the thickness, the draw ratio, the crystallinity or the like.
The transfer layer 10 is a member that protects the coating layer 20 from scratches and foreign matter adhesion. Besides, as described below, it is a member that works as a support when the coating layer 20 is adhered to an adherend, and typically serves as the support when the coating layer 20 of the laminated sheet 1 is transferred to an adherend. The transfer layer 10 is preferably formed from a resin film. Examples of a resin used for the resin film include thermoplastic resins. Specific examples of the resin used for the resin film include polyolefin resins such as cyclic polyolefin resins, polyethylene resins, polypropylene resins, ethylene vinyl acetate copolymer resins, polymethylpentene resins, and polystyrene resins; polyester resins such as polybutylene terephthalate and polyethylene terephthalate; and polyamide resins, polycarbonate resins, polyimide resins, polyarylate resins, acrylic resins, fluororesins, polyvinyl chloride resins, polyvinylidene chloride resins, polyvinyl alcohol resins, polyvinyl butyral resins, nylon resins, polyether ether ketone resins, polysulfone resins, polyether sulfone resins, and tetrafluoroethylene resins. Among these, polyolefin resins are preferred from the viewpoint of followability described later, and polyester resins are preferred from the viewpoint of easily enhancing the bending resistance.
In addition, as the polyolefin resin, a polyethylene resin, a polypropylene resin, and an ethylene vinyl acetate copolymer resin are preferred, and as the polyester resin, polyethylene terephthalate is preferred.
The resin film may be a single-layer film composed of a single layer, or may be a multilayer film composed of two or more layers. Furthermore, in a resin film constituting a release layer, one resin may be singly used, or two or more resins may be used in combination as a resin contained in the resin film. When two or more resins are used in combination, different resins may be used in respective layers to form a multilayer film. Alternatively, a single-layer film may be formed from a mixture of two or more resins, or such a mixture may be used to form one or more layers in a multilayer film.
Examples of the multilayer film include those where a layer constituted by a cyclic polyolefin resin or a polyolefin resin is laminated on a layer constituted by a polyester resin, and for example, a multilayer film in which a polyester resin layer, a polyolefin resin layer, and a polyester resin layer are successively laminated may be used.
Furthermore, the multilayer film may also be one in which each layer is constituted by a polyolefin resin, and specific examples include a multilayer film in which a polyethylene resin, an ethylene vinyl acetate copolymer resin, and a polyethylene resin are successively laminated, and a multilayer film in which a polypropylene resin, an ethylene vinyl acetate copolymer resin, and a polypropylene resin are successively laminated.

Each layer in the transfer layer 10 may contain an additive in addition to the resin. As the additive, known additives that are blended in resin films may be used. Specific examples of the additive include a crystal nucleating agent, a fluorescent whitening agent, an antioxidant, a stabilizer, an ultraviolet absorber, a surfactant, a lubricant, a filler, a cross-linking agent, a cross-linking accelerator, an antistatic agent, a flame retardant, a dispersing agent, a pigment, a dye, and a processing aid.

The resin film may be an oriented resin film or an unoriented resin film not oriented, and an unoriented resin film is preferred. Therefore, the resin film is preferably an unoriented polyester film, and more preferably an unoriented polyethylene terephthalate film. Besides, the unoriented resin film may also be a multilayer film, and may be, for example, a multilayer film that has a polyolefin resin layer in addition to a polyester resin layer as described above.

The transfer layer 10 may have at least one surface subjected to a release treatment with a release agent, such as a silicone-based release agent or a fluorine-based release agent. When the transfer layer 10 is subjected to a release treatment, the resultant release-treated surface preferably corresponds to a surface on the coating layer side. Through the release treatment, the transfer layer 10 can more easily achieve good peelability from the coating layer 20. However, the transfer layer 10 need not undergo a release treatment, as long as it can be peeled off from the coating layer 20.

The thickness of the transfer layer 10 is not especially limited, and is, for example, 10 $\mu$m or more and 1000 $\mu$m or less, preferably 20 $\mu$m or more and 500 $\mu$m or less, and more preferably 30 $\mu$m or more and 300 $\mu$m or less.

(Coating Layer)

The coating layer used in the present invention is formed of a thermosetting resin composition that can be cured by heat. The thermosetting resin composition may contain a polymer component containing a functional group capable of reacting with the resin itself or a curing agent upon heating to cure. Examples of the polymer component used in the thermosetting resin composition include curable resins, and specifically include (meth)acrylic resins, polycarbonate resins, polyester resins, and epoxy resins, among which (meth)acrylic resins are preferred. The coating layer is less likely to adhere to an adherend discontinuously by lowering a tack value thereof, and thus, wrinkles are less likely to be formed. However, when the tack value is too low, it is impossible to bond the coating layer by pressure to an adherend, and therefore, the tack value is necessary to be set in an appropriate range.

The thermosetting resin composition preferably contains a thermally reactive isocyanate as a curing agent. A thermally reactive isocyanate is a compound having an isocyanate group, and details thereof will be described later. By containing a thermally reactive isocyanate, the thermosetting resin composition can be easily cured by heat.

The thermosetting resin composition may contain a functional group reactive with the isocyanate group of the curing agent, and specific examples of such a functional group include a hydroxyl group, an amino group, and a carboxyl group, among which a hydroxyl group is preferred. The functional group reactive with an isocyanate group is usually contained in a polymer component.

The weight average molecular weight of the polymer component having the functional group reactive with the isocyanate group (hereinafter, also referred to simply as the "polymer component") is preferably 50000 or more and 1000000 or less. When the weight average molecular weight of the polymer component is 50000 or more and 1000000 or less, the coatability, curability, tackiness, extensibility and the like of the coating layer can be enhanced in a balanced manner. Furthermore, the laminated sheet including the coating layer can be appropriately maintained in a sheet shape. From these points of view, the weight average molecular weight of the polymer component is more preferably 80000 or more and 800000 or less, further preferably 100000 or more and 600000 or less, and still further preferably 150000 or more and 500000 or less. It is noted that the weight average molecular weight herein refers to one measured by gel permeation chromatography (GPC), and is determined as a standard polystyrene equivalent value.

(Elastic Modulus)

In the laminated sheet, the elastic modulus of the coating layer measured from the transfer layer side is preferably 1.0 to 1500 MPa. When the elastic modulus of the coating layer measured from the transfer layer side is 1.0 to 1500 MPa, it is possible to further suppress peeling marks from remaining on the coating layer when the transfer layer is peeled off and the coating layer is transferred to the adherend, and the followability to the surface of the adherend is further enhanced. From these points of view, the elastic modulus of the coating layer measured from the transfer layer side is more preferably 5.0 to 1000 MPa, further preferably 10 to 600 MPa, and still further preferably 100 to 250 MPa. The elastic modulus of the coating layer measured from the transfer layer side is an elastic modulus measured with a nanoindenter, and specifically can be measured by a method described in Examples below.

The elastic modulus of the coating layer measured from the transfer layer side can be adjusted depending on the glass transition temperature, the hydroxyl value, and the content of the polymer component in the thermosetting resin composition constituting the coating layer, the hydroxyl value and the content of a plasticized resin, the thickness of the coating layer, and the like. It is noted that the elastic modulus is greatly affected by a resin layer contacting the transfer layer (i.e., a first resin layer described later), and hence can be easily adjusted by appropriately changing a polymer component and a plasticized resin of the first resin layer.

The laminated sheet 1 of the embodiment of the present invention is a laminated sheet 1 of a preferred embodiment of the present invention. The laminated sheet 1 of the embodiment of the present invention is merely an example of the laminated sheet of the present invention, and does not limit the laminated sheet of the present invention. The laminated sheet 1 of the preferred embodiment of the present invention includes first and second resin layers 21 and 22, and the resin layer on the opposite side to the transfer layer 10 (i.e., the second resin layer 22) is used as a colored layer. Now, the laminated sheet 1 of the preferred embodiment of the present invention will be described in detail.

The laminated sheet 1 of the preferred embodiment of the present invention includes the first resin layer 21 formed of a first thermosetting resin composition, and the second resin layer 22 formed of a second thermosetting resin composition in the stated order from the transfer layer 10 side, and the second resin layer 22 is a colored layer.

(Thermosetting Resin Composition)

The first thermosetting resin composition contains a first polymer component, and the second thermosetting resin composition contains a second polymer component. It is noted that the first polymer component contained in the first thermosetting resin composition may be the same as, or different from, the second polymer component contained in the second thermosetting resin composition.

<Polymer Component>

The first polymer component and the second polymer component may each be selected from a (meth)acrylic resin, a polycarbonate resin, a polyester resin, and an epoxy resin as described above, and is preferably a (meth)acrylic resin. Each of the first and second polymer components may contain a functional group reactive with a functional group contained in a thermally reactive isocyanate (isocyanate group), and specific examples of such a functional group include a hydroxyl group, an amino group, and a carboxyl group, among which a hydroxyl group is preferred. The first polymer component and the second polymer component may each have one hydroxyl group, and preferably have two or more hydroxyl groups. Therefore, it is preferable that both the first polymer component and the second polymer component are (meth)acrylic polyol resins.

Besides, the weight average molecular weights of the first polymer component and the second polymer component are respectively as described above. The weight average molecular weights of the first polymer component and the second polymer component may be the same as each other or different from each other.

The glass transition temperature (Tg) of the first polymer component is, for example, 20 to 100°C, preferably 30 to 90°C, more preferably 40 to 80°C, and further preferably 50 to 70°C. When the glass transition temperature (Tg) of the first polymer component is within this range, the elastic modulus of the coating layer on the transfer layer side can be easily adjusted to the above-described desired range.

On the other hand, the glass transition temperature of the second polymer component is not especially limited, and is, for example, -50 to 80°C, preferably -20 to 60°C, and more preferably 10 to 50°C.

It is noted that the glass transition temperature, as used herein, is a value determined by differential scanning calorimetry (DSC) in accordance with JIS K 7121.

The hydroxyl value of the first polymer component is preferably 20 mgKOH/g or more and 200 mgKOH/g or less, more preferably 60 mgKOH/g or more and 180 mgKOH/g or less, and further preferably 100 mgKOH/g or more and 150 mgKOH/g or less. When the hydroxyl value of the first polymer component is within this range, good curability is achieved, and the coating layer can easily achieve high hardness after curing. On the other hand, the hydroxyl value of the second polymer component is preferably 20 mgKOH/g or more and 200 mgKOH/g or less, more preferably 50 mgKOH/g or more and 160 mgKOH/g or less, and further preferably 80 mgKOH/g or more and 110 mgKOH/g or less. When the hydroxyl value of the second polymer component is within this range, a good adherence property to a coated plate is achieved, and high adhesion of the coating layer can be achieved after curing.

When each of the first thermosetting resin composition and the second thermosetting resin composition contains a plurality of types of polymer components, the hydroxyl value of the first polymer component and the hydroxyl value of the second polymer component is a weighted average value of the hydroxyl values of the polymer components contained in each of the thermosetting resin compositions. For example, when two types of polymer components, a polymer component (d1) and a polymer component (d2), are used, the weighted average value of the hydroxyl values is represented by the following formula, in which the hydroxyl value of the polymer component (d1) is $X_1$, the blending ratio thereof is $m_1$, the hydroxyl value of polymer component (d2) is $X_2$, and the blending ratio thereof is $m_2$. It is noted that the blending ratio is based on mass.

Weighted average value of hydroxyl values (mgKOH/g) = $X_1 \times (m_1/(m_1 + m_2)) + X_2 \times (m_2/(m_1 + m_2))$

EP 4 786 203 A1

Besides, the hydroxyl value can be measured in accordance with JIS K 1557-1: 2007.

The (meth)acrylic resin is preferably an acrylic polymer obtained by polymerizing a monomer mixture containing a (meth)acrylic acid ester monomer and a functional group-containing monomer having a hydroxyl group. When such an alkyl polymer is used, a hydroxyl group can be contained in the acrylic polymer owing to the hydroxyl group-containing monomer. It is noted that "(meth)acrylic" means methacrylic or acrylic, and other similar terms should be interpreted in the same way.

The (meth)acrylic acid ester monomer can be a (meth)acrylic acid ester monomer not having a functional group, and examples include alkyl (meth)acrylates having about 1 to 18 carbon atoms in an alkyl group, such as methyl (meth)acrylate, and ethyl (meth)acrylate, (meth)acrylates having an aromatic ring, such as benzyl (meth)acrylate, and phenoxydiethylene glycol (meth)acrylate, and 2-ethoxyethyl (meth)acrylate.

The hydroxyl group-containing monomer is not especially limited, and can be a (meth)acrylic acid ester monomer having a hydroxyl group, and an example includes 2-hydroxyethyl (meth)acrylate.

The monomer mixture may also contain a monomer other than the (meth)acrylic acid ester monomer and the hydroxyl group-containing monomer, such as a monomer containing a functional group other than a hydroxyl group, and a styrene derivative monomer. When a monomer containing a functional group other than a hydroxyl group, such as an amino group or a carboxyl group, is used in addition to the hydroxyl group-containing monomer, a functional group other than a hydroxyl group can be introduced into the (meth)acrylic resin in addition to the hydroxyl group. An amino group-containing monomer is not especially limited, and can be a (meth)acrylic acid ester monomer having an amino group, and an example includes 2-aminoethyl (meth)acrylate. A carboxyl group-containing monomer is not especially limited, and an example includes (meth)acrylic acid.

A styrene derivative monomer is not especially limited, and examples include styrene, $\alpha$-methylstyrene, $\alpha$-ethylstyrene, p-methylstyrene, p-methoxystyrene, p-phenylstyrene, p-ethoxystyrene, p-chlorostyrene, m-chlorostyrene, and o-chlorostyrene.

Alternatively, as the (meth)acrylic resin, a copolymer obtained by block or graft polymerization of the aforementioned acrylic polymer with another monomer or polymer may also be used. In this case, examples of the another monomer or polymer include acrylic-based, styrene-based, maleic acid-based, imide-based, silicone-based, and fluorine containing monomers, and polymers of these monomers. Besides, a (meth)acryloyl group may be incorporated in the acrylic polymer by reacting, with a functional group of an acrylic polymer obtained by polymerizing a monomer mixture containing a (meth)acrylic acid ester monomer and a functional group-containing monomer, a (meth)acryloyl group-containing compound that has a reactive group capable of reacting with the functional group, and a (meth)acryloyl group.

Each of the content of the first polymer component in the first thermosetting resin composition and the content of the second polymer component in the second thermosetting resin composition are preferably 20% by mass or more and 90% by mass or less, more preferably 30% by mass or more and 80% by mass or less, and further preferably 40% by mass or more and 70% by mass or less. The content of the first polymer component in the first thermosetting resin composition may be the same as or different from the content of the second polymer component in the second thermosetting resin composition.

The thermosetting resin composition may sometimes be diluted with a volatile component such as a solvent as described below, however, the content (% by mass) of each component in the thermosetting resin composition herein means a value on a solid content basis, excluding the volatile component.

As long as the effects of the present invention are not impaired, the first thermosetting resin composition, when using a (meth)acrylic resin as the first polymer component, may contain a thermosetting resin other than the (meth)acrylic resin, and the second thermosetting resin composition, when using a (meth)acrylic resin as the second polymer component, may contain a thermosetting resin other than the (meth)acrylic resin. Examples of the thermosetting resin other than (meth)acrylic resin include a polycarbonate resin, a polyester resin, and an epoxy resin. Single one of these thermosetting resins may be used, or two or more of these may be used in combination.

<Thermally Reactive Isocyanate>

It is preferable that the first thermosetting resin composition contains a thermally reactive isocyanate (hereinafter, also referred to as the first thermally reactive isocyanate), and that the second thermosetting resin composition contains a thermally reactive isocyanate (hereinafter, also referred to as the second thermally reactive isocyanate).

As the thermally reactive isocyanate, any known isocyanate-based compound used as a curing agent may be used, and a blocked isocyanate is preferably used. A blocked isocyanate is a compound in which the isocyanate group is blocked by a protecting group, and when exposed to a high temperature, the protecting group (or blocked portion) detaches through thermal dissociation, which causes a curing reaction between the thus generated isocyanate group and the functional group (typically a hydroxyl group) of the aforementioned polymer component.

A blocked isocyanate can be obtained, for example, by reacting a blocking agent with an isocyanate compound having two or more isocyanate groups in one molecule.

The isocyanate compound having two or more isocyanate groups in one molecule is not especially limited, and examples include tolylene diisocyanate, diphenylmethane diisocyanate, hexamethylene diisocyanate, pentamethylene diisocyanate, isophorone diisocyanate, xylylene diisocyanate, hydrogenated xylylene diisocyanate, and modified products of these.

Examples of the blocking agent include pyrazole, phenols, oxime, lactam, and malonic esters.

As for each of the first and second thermally reactive isocyanates, a single type may be used, or two or more types may be used together. The first thermally reactive isocyanate may be the same as or different from the second thermally reactive isocyanate.

It is preferable that the thermal dissociation temperature of both the first thermally reactive isocyanate and the second thermally reactive isocyanate is 180°C or less. The thermal dissociation temperature refers to a temperature at which the thermally reactive isocyanate dissociate to generate isocyanate groups. The thermal dissociation temperature of both the first thermally reactive isocyanate and the second thermally reactive isocyanate is preferably 180°C or less because thus the thermosetting resin sheet can be cured at a comparatively low temperature. From the viewpoint of curing the coating layer at a low temperature, the thermal dissociation temperature of both the first thermally reactive isocyanate and the second thermally reactive isocyanate is more preferably 160°C or less, and further preferably 140°C or less. From the viewpoint of storage stability of the thermosetting resin sheet, the thermal dissociation temperature of both the first thermally reactive isocyanate and the second thermally reactive isocyanate are preferably 40°C or more, and more preferably 60°C or more. The thermal dissociation temperature can be measured, for example, by mixing a blocked isocyanate with an equivalent amount of a resin highly reactive with isocyanate, such as a polymer component, stirring the resultant mixture at a prescribed temperature for 6 hours, and then evaluating a gel fraction.

The content of the first thermally reactive isocyanate in the first thermosetting resin composition and the content of the second thermally reactive isocyanate in the second thermosetting resin composition are preferably adjusted so that the number of functional groups in the thermosetting resin relative to the number of isocyanate groups in the thermally reactive isocyanate can be 0.4 or more and 1.8 or less, and more preferably 0.6 or more and 1.5 or less.

The content of the first thermally reactive isocyanate in the first thermosetting resin composition and the content of the second thermally reactive isocyanate in the second thermosetting resin composition are not especially limited as long as these are adjusted so that the ratio of the number of functional groups relative to the number of isocyanate groups is within the above-described range, and are respectively preferably 10% by mass or more and 70% by mass or less, more preferably 20% by mass or more and 60% by mass or less, and further preferably 30% by mass or more and 50% by mass or less. The content of the first thermally reactive isocyanate in the first thermosetting resin composition may be the same as or different from the content of the second thermally reactive isocyanate in the second thermosetting resin composition.

<Plasticized Resin>

The first thermosetting resin composition preferably contains, as the resin, a resin having a weight average molecular weight of less than 50000 (hereinafter also referred to as the plasticized resin (A2)) in addition to the (meth) acrylic resin (A1). Also the second thermosetting resin composition preferably contains, as the resin, a resin having a weight average molecular weight of less than 50000 (hereinafter also referred to as the plasticized resin (A2)) in addition to the (meth)acrylic resin (A1).

When the first thermosetting resin composition contains the plasticized resin (A2) having a low weight average molecular weight in addition to the high molecular weight (meth)acrylic resin (A1), the glass transition temperature of the first thermosetting resin is easily lowered. Besides, the coatability, curability, tackiness, extensibility and the like of the first thermosetting resin composition can be easily enhanced in a balanced manner. Also when the second thermosetting resin composition contains the plasticized resin (A2) having a low weight average molecular weight in addition to the high molecular weight (meth)acrylic resin (A1), the glass transition temperature of the second thermosetting resin is easily lowered. Besides, the coatability, curability, tackiness, extensibility and the like of the second thermosetting resin composition can be easily enhanced in a balanced manner. In addition, the wettability of the second thermosetting resin composition to an adherend can be enhanced, and thus, the adherence property to the adherend can be enhanced.

As the plasticized resin (A2), one that is compatible with the (meth)acrylic resin (A1) and, similarly to the (meth) acrylic resin (A1), possesses a thermally curable functional group is preferred. Examples of the resin used as the plasticized resin (A2) include (meth)acrylic resins, polycarbonate resins, polyester resins, and epoxy resins, among which (meth)acrylic resins or polycarbonate resins are preferred.

The (meth)acrylic resin used as the plasticized resin (A2) can be oligomers that possess a functional group such as a hydroxyl group, an amino group, or a carboxyl group. Examples of the (meth)acrylic resin used as the plasticized resin (A2) include those described above regarding the (meth)acrylic resin, and a (meth)acrylic polyol having a plurality of hydroxyl groups is preferably used. Besides, a poly(meth)acrylate having a carboxyl group is also preferred. As the polycarbonate resin, a polycarbonate polyol is preferred.

The weight average molecular weight of the plasticized resin (A2) is preferably 50 or more and 10000 or less, more preferably 100 or more and 5000 or less, and further preferably 300 or more and 3000 or less.

It is desirable that the plasticized resin (A2) is a liquid at ordinary temperature and pressure. The plasticized resin (A2) may or may not have a glass transition temperature. When the plasticized resin (A2) has a glass transition temperature, the glass transition temperature is not especially limited, and is preferably less than 0°C, more preferably -20°C or less, and further preferably -40°C or less. The lower limit of the glass transition temperature is not especially limited, and is, for example, -120°C or more, and preferably - 100°C or more.

When the glass transition temperature of the plasticized resin (A2) is within the above-described range, tackiness can be easily exhibited.

The hydroxyl value of the plasticized resin (A2) is preferably 20 mgKOH/g or more and 350 mgKOH/g or less, more preferably 50 mgKOH/g or more and 300 mgKOH/g, and further preferably 80 mgKOH/g or more and 250 mgKOH/g.

It is noted that the plasticized resin (A2) is not limited to the (meth)acrylic resin and the polycarbonate resin, but any component having a low molecular weight can be used as the plasticized resin (A2). Examples of a plasticized resin other than the (meth)acrylic resin and the polycarbonate resin include organic ester plasticized resins, such as monobasic organic acid esters and polybasic organic acid esters, phosphorus acid typed plasticized resins, such as organic phosphoric acids and organic phosphorous acids, and glycol-based plasticized resins.

When the first thermosetting resin composition contains the plasticized resin, the content of the plasticized resin in the first thermosetting resin composition is preferably 1 part by mass or more and 40 parts by mass or less, more preferably 3 parts by mass or more and 30 parts by mass or less, and further preferably 5 parts by mass or more and 20 parts by mass or less relative to 100 parts by mass of the total content of the polymer component, the thermally reactive isocyanate, and the plasticized resin. In the coating layer, when the first thermosetting resin composition contains the plasticized resin, the elastic modulus of the coating layer measured from the transfer layer side can be adjusted to the desired range by appropriately adjusting the content of the plasticized resin in the first thermosetting resin composition.

When the second thermosetting resin composition contains the plasticized resin, the content of the plasticized resin in the second thermosetting resin composition is preferably 1 part by mass or more and 50 parts by mass or less, more preferably 3 parts by mass or more and 35 parts by mass or less, and further preferably 5 parts by mass or more and 20 parts by mass or less relative to 100 parts by mass of the total content of the polymer component, the thermally reactive isocyanate, and the plasticized resin.

The plasticized resin used in the first thermosetting resin composition may be the same as or different from the plasticized resin used in the second thermosetting resin composition. Besides, the content of the plasticized resin in the first thermosetting resin composition may be the same as or different from the content of the plasticized resin in the second thermosetting resin composition.

<Colorant>

The second thermosetting resin composition preferably contains a colorant. When containing a colorant, the second resin layer can be a colored layer, and thus, the aesthetic quality of the coating layer 20 can be enhanced. Examples of the colorant include a pigment, a dye, and an brightener. Examples of the pigment include metal oxide pigments such as titanium oxide and iron oxide, inorganic pigments such carbon black, clay, kaolin, barium sulfate, barium carbonate, calcium carbonate, talc, silica, and alumina white, and organic pigments such as azo pigments, quinacridone pigments, diketopyrrolopyrrole pigments, perylene pigments, perinone pigments, benzimidazolone pigments, vat pigments, isoindoline pigments, isoindolinone pigments, metal chelate azo pigments, phthalocyanine pigments, indanthrone pigments, dioxazine pigments, and indigo pigments. Examples of the dye include azo dyes, anthraquinone dyes, indigoid dyes, and stilbene dyes. Examples of the brightener include compounds in which a titanium oxide layer is provided on the surface of, for example, natural mica, synthetic mica, alumina flakes, and glass flakes. One of these colorants may be singly used, or two or more of these may be used in combination.

The content of an active component of the colorant in the second thermosetting resin composition, that is, the content of the colorant excluding a binder resin, a dispersant, and an additive, varies depending on the color of the colorant. For example, the content of a white colorant necessary for imparting hiding power to the second thermosetting resin composition is significantly larger than the necessary content of a black colorant. For example, when the colorant is a black colorant such as carbon black, the content of the colorant is, for instance, 0.5 parts by mass or more, preferably 1 part by mass or more, and more preferably 2 parts by mass or more, and preferably 25 parts by mass or less, more preferably 20 parts by mass or less, and further preferably 15 parts by mass or less relative to 100 parts by mass of the total content of the second polymer component, the second thermally reactive isocyanate, and the plasticized resin.

<Other Components>

The first thermosetting resin composition and the second thermosetting resin composition may each contain components other than those described above, such as additives other than those described above. Examples of the additives include a surface conditioning agents, a defoaming agent, a urethanization catalyst, a cross-linking agent, a plasticizer, a thickening agent, an adhesion promoter, a fluorescent whitening agent, a stabilizer, a UV absorber, a surfactant, a flame retardant, an antistatic agent, a dispersant, an inorganic filler other than the pigment and the brightener, an anti-aging agent, an antioxidant, and a rust inhibitor.

The first thermosetting resin composition may contain a colorant in addition to the first polymer component and the first thermally reactive isocyanate, but it is preferable that it does not contain a colorant, or if contains, contains it only in an amount that does not impair transparency, and the first resin layer 21 is preferably a so-called clear layer. It is noted that a clear layer is a transparent layer, and "transparent" herein means that the light transmittance at a wavelength of 450 nm is 80% or more. On the other hand, since the second thermosetting resin composition contains a colorant, the second resin layer is a colored resin layer, and is preferably formed as an opaque layer.

The thickness of the first resin layer 21 is not especially limited, and is, for example, 5 $\mu$m or more and 150 $\mu$m or less, and preferably 10 $\mu$m or more and 50 $\mu$m or less. The thickness of the second resin layer 22 is not especially limited, and is, for example, 5 $\mu$m or more and 150 $\mu$m or less, and preferably 10 $\mu$m or more and 50 $\mu$m or less.

The coating layer 20 of the laminated sheet 1 of the preferred embodiment of the present invention includes the two resin layers (the first resin layer 21 and the second resin layer 22). The number of resin layers constituting the coating layer of the laminated sheet of the embodiment of the present invention is not limited to two. For example, as in a laminate 1A illustrated in Fig. 2, a coating layer 20A may be constituted by a single resin layer (first resin layer).

When constituted by a single resin layer, the coating layer 20A is preferably a colored layer. The coating layer 20A that is a colored layer may have the same composition as the first thermosetting resin composition described above, except that it contains a colorant. Furthermore, the type and content of the colorant may be the same as those described above regarding the second thermosetting resin composition.

Alternatively, as in a laminate 1B illustrated in Fig. 3, a coating layer 20B may be constituted by three resin layers (21 to 23). In this case, the resin layer 21 on the transfer layer side is preferably constituted by the first resin layer described above, and the resin layer 22 farthest from the transfer layer is preferably constituted by the second resin layer described above. The resin layer 23 present between the two resin layers 21 and 22 may use the same types of materials as the resin layers 21 and 22, and for example, the resin layer 23 preferably contains a polymer component and a thermally reactive isocyanate. In such an aspect, even when the resin layer 23 is provided between the resin layers 21 and 22, the peel strength between the resin layers can be increased, so that interfacial peeling can be prevented from occurring between the resin layers. The resin layer 23 may include, in addition to the polymer component and the thermally reactive isocyanate, a colorant. The resin layer 23 containing a colorant, and a combined use of the resin layer 23 containing a colorant can further enhance the aesthetic quality of the coating layer 20B. Besides, although not illustrated in drawings, the coating layer may be constituted by four or more resin layers. In this case, a resin layer closest to the transfer layer preferably corresponds to the first resin layer described above, and a resin layer farthest from the transfer layer preferably corresponds to the second resin layer described above.

The description has been given premised on the coating layer including a colored layer for the purpose of enhancing aesthetic quality, but the coating layer can be provided with various functions, and it is not necessarily required to include a colored layer. The coating layer may be a clear layer, and for example, in the laminated sheet 1A, the coating layer 20A may be formed of a first thermosetting resin composition not containing a colorant.

Besides, the coating layer can be provided with various functions other than the protection of an adherend or enhancement of the aesthetic quality. For example, the coating layer may function as a heat-shielding coating, and in this case, the coating layer may be a heat-shielding layer containing a heat-shielding material. Furthermore, by providing surface irregularities on the coating layer, surface properties such as a matte finish or texturing can be imparted. Moreover, functions such as rust prevention, mold prevention, heat insulation, and antistatic properties can also be achieved by blending a component specific to the purpose into the thermosetting resin composition.

In any aspect, the coating layer 20 may have a first resin layer formed of at least the first thermosetting resin composition that is in contact with the transfer layer 10. The details of the first thermosetting resin composition are as described above, but a component suitable for the objective may be contained as appropriate, if necessary.

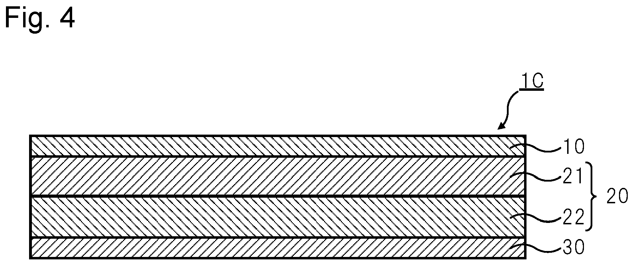

As illustrated in Fig. 4, a laminated sheet 1C according to an embodiment of the present invention may further include a substrate 30 provided on the opposite side of the coating layer 20 to the transfer layer. The substrate 30 used in the laminated sheet 1C is a member that protects the coating layer 20 from scratches and foreign matter adhesion, and may be peeled off from the coating layer 20 before the coating layer 20 is laminated to an adherend. The substrate 30 is preferably formed from a resin film. A resin used for the resin film includes, for example, a thermoplastic resin. Specific examples of the thermoplastic resin used for the substrate 30 are the same as the resins usable for the transfer layer 10 described above, among which polyester resins are preferred. It is noted that the substrate may be provided on the opposite side of the coating layer to the transfer layer not only in the laminated sheet 1C but also in a laminated sheet having any structure.

The resin film may be a single-layer film composed of a single layer, or may be a multilayer film composed of two or more layers. Furthermore, in a resin film constituting a release layer, as a resin contained in the resin film, one resin may be singly used, or two or more resins may be used in combination. When two or more resins are used in combination, different resins may be used in respective layers to form a multilayer film. Alternatively, a single-layer film may be formed from a mixture of two or more resins, or such a mixture may be used to form one or more layers in a multilayer film.

Each layer of the substrate 30 may contain an additive in addition to the resin. Specific examples of the additive are the same as those described above regarding the transfer layer.

The resin film in the substrate 30 may be an oriented resin film or an unoriented resin film not oriented, and an oriented resin film is preferred. Therefore, the resin film is preferably an oriented polyester film.

The substrate 30 may have at least one surface subjected to a release treatment with a release agent, such as a silicone-based release agent or a fluorine-based release agent. When the substrate 30 is subjected to a release treatment, the resultant release-treated surface preferably constitutes a surface on the coating layer side. Through the release treatment, the substrate 30 can more easily achieve good peelability from the coating layer 20. However, the substrate 30 need not undergo a release treatment, as long as it can be peeled off from the coating layer 20.

The thickness of the substrate 30 is not especially limited, and is, for example, 10 $\mu$m or more and 1000 $\mu$m or less, preferably 30 $\mu$m or more and 700 $\mu$m or less, and more preferably 50 $\mu$m or more and 500 $\mu$m or less.

(Moisture-curable Resin Composition)

The coating layer used in the present invention may be formed of a moisture-curable resin composition that can be cured by moisture. The moisture-curable resin composition contains a moisture-curable resin. An example of the moisture-curable resin includes a prepolymer having an isocyanate group.

An example of the prepolymer having an isocyanate group includes a prepolymer having an isocyanate group at the terminal. A prepolymer having an isocyanate group at the terminal can be one obtained, for example, by reacting a polyisocyanate with an active hydrogen-containing compound and/or an active hydrogen-containing polymer.

As the polyisocyanate used in preparing the prepolymer having an isocyanate group at the terminal, tolylene diisocyanate, crude tolylene diisocyanate, diphenylmethane diisocyanate, polymethylene polyphenyl isocyanate, carbodiimidized diphenylmethane diisocyanate, phenylene diisocyanate, 1,5-naphthalene diisocyanate, xylylene diisocyanate, hexamethylene diisocyanate and the like are used, and polymethylene polyphenyl isocyanate is preferably used.

The weight average molecular weight of the prepolymer is preferably 20000 or more and 1000000 or less. It is noted that the weight average molecular weight is measured by gel permeation chromatography (GPC), and is determined as a standard polystyrene equivalent value.

As the active hydrogen-containing compound or the active hydrogen-containing polymer, for example, the following is used:

Active hydrogen-containing compounds such as ethylene glycol, diethylene glycol, propylene glycol, dipropylene glycol, glycerin, trimethylolethane, trimethylolpropane, castor oil, diglycerin, sorbitol, pentaerythritol, and dipentaerythritol; and active hydrogen-containing polymers having two or more terminal hydroxyl groups, and having an average molecular weight of 3,000 or less and an average functionality of 2 or more, preferably an average molecular weight of 200 to 1,000, and an average functionality of 2 to 2.5, obtained by addition polymerization of any of the above-described active hydrogen-containing compounds with one or a mixture of alkylene oxides, such as ethylene oxide, propylene oxide, butylene oxide, styrene oxide, and tetrahydrofuran are used. In addition, active hydrogen-containing polymers having an average molecular weight of 3,000 or less and an average functionality of 1.5 or more, preferably an average molecular weight of 200 to 1,000 and an average functionality of 2 to 2.5, such as polyester polyols, oil-modified polyester polyols, poly $\varepsilon$-caprolactone polyols, polycarbonate diols, acrylic polyols, polyamines, polyamides, urea resins, and melamine resins can also be used together.

The prepolymer having a terminal isocyanate group has an effective NCO content of 1 to 15% by mass, and preferably 8 to 13% by mass.

Among the above-described examples, a urethane prepolymer having a terminal isocyanate group is preferred.

The prepolymer having a terminal isocyanate group can be synthesized by performing a urethane-forming reaction between the aforementioned polyisocyanate and a conventional polyol, including the active hydrogen-containing polymers mentioned above, in a moisture-shielded system under isocyanate-excess conditions at a temperature of 40°C to 90°C, and preferably 55°C to 75°C.

The urethane-forming reaction is usually carried out in an organic solvent, and as such a solvent, ketone-based solvents such as methyl ethyl ketone, ester-based solvents such as ethyl acetate, aromatic solvents such as toluene and xylene, and other solvents generally used for coating materials are used. A catalyst may also be used for the urethane-forming reaction, and as such catalysts, tertiary amine catalysts such as triethylamine and dimethylaniline, or metal catalysts such as tin and zinc are used. These also serve as catalysts for a reaction with moisture in the air during the formation of a coating film.

The content of the prepolymer in the moisture-curable resin composition may be, for example, 20% by mass or more, and is preferably 30% by mass or more, more preferably 40% by mass or more, and further preferably 50% by mass or more. The content of the prepolymer in the moisture-curable resin composition may be 100% by mass or less, and from the viewpoint of ensuring the content of other components such as a compound (B) in a certain level or more, is preferably 90% by mass or less, more preferably 85% by mass or less, and further preferably 80% by mass or less.

(Compound (B))

The moisture-curable resin composition preferably contains, in addition to the prepolymer, a compound (B) having an isocyanate group (polyisocyanate compound). The compound (B) may be any compound cured by moisture. The moisture-curable resin composition, by containing the compound (B), can increase the hardness of the coating layer after curing, and thus, the mechanical strength, the scratch resistance, and the like of the coating layer after curing can be enhanced. The compound (B) preferably has two or more isocyanate groups. Furthermore, the compound (B) may be a compound other than the prepolymer described above, and a compound that does not contain a polyacrylic backbone or a polyurethane backbone.

Examples of the compound (B) include polyisocyanates, such as aliphatic diisocyanate compounds such as hexamethylene diisocyanate (HDI), trimethylhexamethylene diisocyanate, lysine diisocyanate, norbornane diisocyanate, isophorone diisocyanate (IPDI), xylylene diisocyanate, hydrogenated xylylene diisocyanate (H6XDI), hydrogenated diphenylmethane diisocyanate, cyclohexane diisocyanate, bis(isocyanatomethyl)cyclohexane, and dicyclohexylmethane diisocyanate, and aromatic diisocyanate compounds such as 4,4-diphenylmethane diisocyanate, tolylene diisocyanate, and naphthalene-1,5-diisocyanate.

The compound (B) may also be a modified product obtained by polymerizing any of the polyisocyanates described above, may be polymeric MDI, or a polyol-modified products (adduct) of a polyisocyanate such as a trimethylolpropane adduct of a polyisocyanate, a biuret of a polyisocyanate, an allophanate of a polyisocyanate, an isocyanurate of a polyisocyanate, and condensates of these. Preferred specific examples include HDI adducts, HDI biurets, HDI allophanates, HDI isocyanurates, H6XDI isocyanurates, IPDI isocyanurates, and IPDI adducts.

As the compound (B), it is preferable to select one that is flexible and has high adhesion in an uncured state, and from this viewpoint, an aliphatic polyisocyanate or modified products thereof is preferred, and in particular, an adduct, a biuret, an allophanate, and an isocyanurate of an aliphatic polyisocyanate are more preferred, and an adduct, a biuret, an allophanate, and an isocyanurate of HDI or IPDI are further preferred.

As the compound (B), one of these may be singly used, or a combination of two or more of these may be used.

The molecular weight of the compound (B) is not especially limited, and is preferably 1000 or less. When the molecular weight of the compound (B) is low, it is possible to increase the adhesion of the coating layer before curing and the adherence property to the adherend after curing. The molecular weight of the compound (B) is preferably 800 or less, and more preferably 700 or less. The molecular weight of the compound (B) is not especially limited, and may be, for example, 160 or more, is preferably 200 or more, more preferably 300 or more, and further preferably 400 or more.

The molecular weight of the compound (B) is calculated based on the structural formula thereof. When two or more types of the compound (B) are used in combination, the molecular weight refers to the weight average molecular weight.

When the compound (B) is used, the content of the compound (B) in the moisture-curable resin composition is preferably 5 parts by mass or more, more preferably 10 parts by mass or more, and further preferably 15 parts by mass or more based on 100 parts by mass of the prepolymer and the compound (B) in total. When the content of the compound (B) is set to a certain level or more, the hardness of the resin layer after curing can be easily increased. The content of the compound (B) may be, for example, 80 parts by mass or less, and is preferably 60 parts by mass or less, more preferably 50 parts by mass or less, and further preferably 40 parts by mass or less. When the content of the compound (B) is set to a certain level or less, the surface condition of the resin layer can be enhanced, while the adhesion of the coating layer before curing and the adherence property after curing can be easily enhanced.

In the laminated sheet of the present invention, when the coating layer is formed of the moisture-curable resin composition, the first resin layer and the second resin layer may be included as described above. When the first resin layer and the second resin layer are included, the first resin layer and the second resin layer may be respectively formed of a first moisture-curable resin composition and a second moisture-curable resin composition both containing the prepolymer or containing both the prepolymer and the compound (B). The first moisture-curable resin composition and the second moisture-curable resin composition may each be prepared by appropriately selecting from the above-described moisture-curable resin compositions.

As described below, when the first resin layer and the second resin layer are provided, the content of the compound (B) in the first moisture-curable resin composition is further preferably 25 parts by mass or more, and the content of the compound (B) in the second moisture-curable resin composition is further preferably less than 25 parts by mass.

Besides, when the first moisture-curable resin composition and the second moisture-curable resin composition contain the compound (B), the blending amount of the compound (B) may be adjusted within the above-described range. However, based on 100 parts by mass of the prepolymer and the compound (B) in total, it is preferable that the content of the compound (B) in the first moisture-curable resin composition is larger than the content of compound (B) in the second moisture-curable resin composition. In this case, a difference between the content of the compound (B) in the first moisture-curable resin composition based on 100 parts by mass of the prepolymer and the compound (B) in total, and the content of the compound (B) in the second moisture-curable resin composition based on 100 parts by mass of the prepolymer and the compound (B) in total is, for example, 2 parts by mass or more and 25 parts by mass or less, preferably 5 parts by mass or more and 20 parts by mass or less, and more preferably 7 parts by mass or more and 15 parts by mass or less.

Thus, by making the content of the compound (B) in the second moisture-curable resin composition larger than the content of the compound (B) in the first moisture-curable resin composition, the above-described elastic modulus can be increased, while the adherence property to the adherend can also be easily enhanced.

Further, it is also preferable that the second moisture-curable resin composition contains a colorant. By containing a colorant, the second moisture-curable resin composition can form the second resin layer as a colored layer, and thus, the aesthetic quality of the coating layer 20 can be enhanced.

The type of colorant and the content of the colorant in the second moisture-curable resin composition are as described above regarding the second thermosetting resin composition, and the basis for the content of the colorant shall be based on 100 parts by mass of the total of the prepolymer and the compound (B).

On the other hand, the first moisture-curable resin composition may also contain a colorant, but it is preferable that the colorant is not contained or, if contained, is contained in an amount that does not impair transparency, and the first resin layer is, as described above, preferably a so-called clear layer.

In addition, when the coating layer is formed of a moisture-curable resin composition and is a single resin layer, the coating layer may be a colored layer or may not be a colored layer. In the case of a colored layer, the colorant may be contained as described above.

The moisture-curable resin composition (or the first moisture-curable resin composition and the second moisture-curable resin composition) may each contain a component other than those described above, and may, for example, contain an additive other than those described above. An example of the additive includes a moisture-curing catalyst. In addition to a moisture-curing catalyst, the additives enumerated above regarding the thermosetting resin composition can be appropriately used.

It should be noted that, when a moisture-curable resin composition other than those described above is used, the configuration of the coating layer is the same as in the case where the thermosetting resin composition is used, and therefore the description is omitted.

[Method for Producing Laminated Sheet]

Hereinafter, description will be mainly given on a method for producing a laminated sheet according to an embodiment in which a coating layer is formed of a thermosetting resin composition, and the coating layer has a first resin layer and a second resin layer. This production method includes the following process A, process B, and process C.

(1) Process A

In the process A, a first coating material containing a first thermosetting resin composition comprising a first polymer component and a thermally reactive isocyanate is applied to a transfer layer and dried to prepare a first laminate including the transfer layer, and a first resin layer formed of the first thermosetting resin composition that is provided on the transfer layer. It should be noted that the first thermosetting resin composition, the transfer layer, and the first resin layer have already been described, and hence the description of the first thermosetting resin composition, the transfer layer, and the first resin layer is omitted.

The first coating material may be composed of the first thermosetting resin composition, but from the viewpoint of enhancing workability such as a coating property, it is preferable that the first thermosetting resin composition is diluted with a solvent. Examples of the solvent include ethyl acetate, butyl acetate, methyl ethyl ketone, isopropyl alcohol, methyl methacrylate, and toluene.

Besides, it is preferable that the drying performed after applying the first coating material to the transfer layer include at least a main drying process described below, and it is more preferable that the drying includes a pre-drying process described below and the main drying process performed in the stated order.

The drying temperature employed in the pre-drying process is preferably 50°C or more and 70°C or less, and more preferably 55°C or more and 65°C or less. The drying time employed in the pre-drying process is preferably 1 minute or more and 30 minutes or less, and more preferably 2 minutes or more and 15 minutes or less.

The drying temperature employed in the main drying process is preferably 75°C or more and 130°C or less, and more preferably 80°C or more and 120°C or less. When the drying temperature is the lower limit value or higher, the solvent can be more appropriately removed, which prevents formation of bubbles caused by vaporization of the solvent or the like during curing of the resin layer. On the other hand, by setting the drying temperature to the upper limit value or lower, excessive curing of the thermosetting resin composition during drying can be prevented.

The drying time employed in the main drying process is preferably 1 minute or more and 30 minutes or less, and more preferably 2 minutes or more and 15 minutes or less. When the drying time is set to the lower limit value or more, the solvent can be more appropriately removed, which prevents formation of bubbles caused by vaporization of the solvent or the like during curing of the resin layer. On the other hand, when the drying time is set to the upper limit value or less, excessive curing of the thermosetting resin composition during drying can be prevented.

Further, initial curing may be performed on the resin layer after drying, if necessary. "Initial curing" refers to curing of the thermosetting resin composition constituting the resin layer to a semi-cured state. The initial curing can be performed by heating, and may be carried out under conditions of a heating temperature of 90°C or more and 150°C or less and a heating time of about 2 minutes or more and 5 minutes or less.

(2) Process B

In the process B, a second coating material containing a second thermosetting resin composition comprising a second polymer component, a second thermally reactive isocyanate, and a colorant is applied to a substrate and dried to prepare a second laminate including the substrate, and a second resin layer formed of the second thermosetting resin composition that is provided on the substrate. It should be noted that the second thermosetting resin composition, the substrate, and the second resin layer have already been described, and hence the description of the second thermosetting resin composition, the substrate, and the second resin layer is omitted.

The second coating material may be composed of the second thermosetting resin composition, but from the viewpoint of enhancing workability such as a coating property, it is preferable that the second thermosetting resin composition is diluted with a solvent. Examples of the solvent include ethyl acetate, butyl acetate, methyl ethyl ketone, isopropyl alcohol, methyl methacrylate, and toluene.

Besides, it is preferable that the drying performed after applying the second coating material to the substrate include, similarly to the drying performed after applying the first coating material to the transfer layer, at least a main drying process described below, and it is more preferable that the drying includes a pre-drying process described below and the main drying process performed in the stated order. It should be noted that the pre-drying process and the main drying process have already been described in the section "Process A", and therefore the description of the pre-drying process and the main drying process is omitted.

(3) Process C

In the process C, the first laminate and the second laminate are laminated to each other so that the first resin layer and the second resin layer face each other. As a result, a laminated sheet 1C having a laminated structure including the transfer layer/the first resin layer/the second resin layer/the substrate can be produced. By peeling off the substrate from this laminated sheet, a laminated sheet composed of the transfer layer, the first resin layer, and the second resin layer can be produced.

Alternatively, when the another resin layer 23 is further provided between the resin layers 21 and 22, a third laminate is first prepared by forming the another resin layer on a separately provided release film or the like. The third laminate is then laminated to the first laminate to form the another resin layer on the first resin layer of the first laminate, or the third laminate is laminated to the second laminate to form the another resin layer on the second resin layer of the second laminate. Thereafter, as in the above-described process C, by laminating the first laminate and the second laminate to each other, a laminated sheet 1B composed of the resin layer 21, the resin layer 22, and the another resin layer 23 provided between the resin layers 21 and 22 can be produced. In this case, the release film may be peeled off after laminating the another resin layer 23 to the resin layer 22 or the resin layer 21, or before laminating. As the release film, a release polyethylene terephthalate film (release PET film) or the like may be used.

Alternatively, when the coating layer 20 is composed of the single resin layer 20A, a laminated sheet 1A in which the resin layer 20A is laminated on the transfer layer 10 can be obtained by omitting the processes B and C. In addition, the substrate 30 may further be overlaid on the resin layer 20A laminated on the transfer layer 10.

It is noted that the laminated sheet of the preferred embodiment of the present invention can be produced also by methods different from the above-described method for producing a laminated sheet.

When the coating layer is a laminate formed of the moisture-curable resin composition, the laminate can be produced in the same manner as in the above-described method for producing a laminated sheet by using a coating material containing a moisture-curable resin composition instead of a coating material containing a thermosetting resin composition.

[Method of Using Laminated Sheet]

The laminated sheet according to the preferred embodiment of the present invention is a sheet for forming a decoration such as coating on various articles (adherends), and is used by being adhered to an adherend. Specifically, in the laminated sheet of the preferred embodiment of the present invention, after peeling off the substrate, the transfer layer is peeled off and the coating layer is laminated to the adherend, and the coating layer laminated to the adherend may be heated. The method for peeling off the substrate is not especially limited, and the substrate may be peeled off by a peeling device or manually. The lamination of the coating layer to the adherend is also not especially limited, and may be carried out manually using a squeegee or the like, or by using a laminating device. When the coating layer is formed of the thermosetting resin composition, the coating layer is cured when heated, and a decoration is formed by the cured coating layer. When the coating layer is formed of the moisture-curable resin composition, the coating layer laminated to the adherend is cured by moisture, for example, by being left under an atmospheric environment or in a high-humidity environment, and a decoration is formed by the cured coating layer.

The transfer layer is removed by being peeled off after the substrate is peeled off, and typically, after the transfer layer has been peeled off, the coating layer may be cured by heating or by being left as described above. Preferably, the transfer layer is peeled off from the coating layer after the laminated sheet has been laminated to the adherend via the coating layer. In this manner, the transfer layer serves as a support for supporting the coating layer when the coating layer is laminated to the adherend. The method for peeling off the transfer layer is not especially limited, and the transfer layer may be peeled off with a peeling device or manually.

Furthermore, the transfer layer may be peeled off at room temperature or at a temperature in the vicinity thereof (about 15 to 35°C), or may be peeled off after cooling the coating layer.

The laminated sheet of one embodiment of the present invention may be preliminarily molded by vacuum molding, press molding, air-pressure molding, or the like so as to have a shape corresponding to the shape of the adherend, before being laminated to the adherend. When preliminary molding is performed, it may be carried out in the laminated sheet either before the substrate is peeled off from the coating layer or after the substrate has been peeled off from the coating layer. By performing the preliminary molding, even when the adherend has a complicated shape, the laminated sheet can be easily brought into close contact with and laminated to the adherend. Among the aforementioned methods, the preliminary molding is preferably carried out by vacuum molding. In the preliminary molding, the laminated sheet may be bonded by pressure to a jig or a mold by vacuum molding, so as to be shaped into a form corresponding to the surface shape of the adherend while being stretched by the jig or the mold.

Here, the vacuum molding is preferably TOM molding. TOM stands for "Three dimension Overlay Method", and by applying TOM molding, the molding can be performed into a complicated shape.

The adherend to which the laminated sheet of the present invention is laminated is not especially limited, and examples include electric appliances, vehicle interior materials such as interior materials for automobiles and railway vehicles, vehicle exterior materials such as exterior materials for automobiles and railway vehicles, miscellaneous goods, exterior materials for ships, aircraft and heavy machinery, exterior walls or roofing materials for houses and buildings, bridges, steel frames, plants, and wind power generation blades. Among these, vehicle exterior materials such as automobile exterior materials are preferred. Examples of vehicle exterior materials include hoods, roofs, door panels, bumpers, fuel filler panels, trunk lids, and rear gates. When adhered to a vehicle exterior material, the laminated sheet of the present invention may be adhered to an exterior material after the exterior material has been attached to a vehicle body, or may be adhered to an exterior material before the exterior material is attached to a vehicle body.

The material of the adherend is not especially limited, and may be any of resin materials, inorganic materials such as ceramics, or metallic materials such as steel material. Among these, metallic materials such as a steel material are preferred. For metallic materials such as a steel material, it is difficult to perform coating simultaneously with molding of the adherend by insert molding, and coating with a resin sheet is difficult, but when the laminated sheet of the present invention is used, such materials can also be easily coated.

[Vehicle]

A vehicle of the present invention is coated by using the laminated sheet of the present invention. As described above, by using the laminated sheet of the present invention, when the transfer layer is peeled off and the coating layer is transferred to the adherend, the peeling marks remaining on the coating layer can be suppressed, and when the laminated sheet is adhered to the adherend, the formation of wrinkles in the laminated sheet can also be suppressed. Accordingly, the vehicle of the present invention can have a coated surface free from peeling marks and wrinkles.

Examples

The present invention will now be described in more details by way of examples, and it is noted that the present invention is not limited at all by these examples.

The measurement method and the evaluation method employed in the present examples are as follows.

(Bending resistance)

A transfer layer was cut into a strip having a size of a width of 20 mm and a length of 200 mm to prepare a test piece. Bending resistance was measured in accordance with the Bending resistance A method (45°cantilever method) according to JIS L 1084, and the minimum value was taken as the measured value. The measurement limit of the apparatus was 150 mm, and values exceeding this were indicated as "150 <".

(Elastic Modulus)

After the laminated sheet was laminated to a polyethylene terephthalate film having a thickness of 50 $\mu$m and the transfer layer was peeled off, the elastic modulus was measured from the first resin layer side of the coating layer with a nanoindenter. As the nanoindenter, "TI950" manufactured by Hysitron was used, and a Berkovich-type diamond indenter was attached, the indenter was pressed into the surface of the coating layer at a speed of 200 nm/sec over 5 seconds, and then unloaded over 5 seconds, and thus, the elastic modulus was measured. The measurement of the elastic modulus was carried out at room temperature (25°C).

(Residual Peeling Marks)

Each laminated sheet of Examples and Comparative Examples was cut into 50 mm $\times$ 50 mm, the resultant was adhered to a coated steel plate using a squeegee and water containing 0.5% of a surfactant, and then the transfer layer was peeled off to transfer the coating layer onto the coated steel plate. The appearance of the surface of the coating layer (the surface of the first resin layer) after peeling off the transfer layer was recognized, and each laminated sheet of Examples and Comparative Examples was evaluated according to the following evaluation criteria.

<Evaluation Criteria>

A: The transfer layer was easily peeled off, and no roughness, spot-like or line-like peeling marks were recognized on the surface of the first resin layer after peeling off the transfer layer.
B: The transfer layer was easily peeled off, and spot-like peeling marks were recognized on the surface of the first resin layer after peeling off the transfer layer, but no roughness or line-like peeling marks were recognized.
C: The transfer layer was difficult to peel off, but no line-like peeling marks were recognized on the surface of the first resin layer after peeling off the transfer layer.
D: Roughness and line-like peeling marks were recognized on the surface of the first resin layer after peeling off the transfer layer.

(Adhering Property Evaluation)

Each laminated sheet of Examples and Comparative Examples was cut into 50 mm $\times$ 100 mm, the resultant was adhered to a coated steel plate using a squeegee and water containing 0.5% of a surfactant, and each laminated sheet of Examples and Comparative Examples was evaluated according to the following evaluation criteria.

<Evaluation Criteria>

A: Among ten times of adhesion to the coated steel plate, the laminated sheet adhered did not have wrinkles even once.
B: Among ten times of adhesion to the coated steel plate, the laminated sheet adhered had wrinkles once or more times.

(Followability Evaluation)

An adherend having a step of 10 mm and an adherend having a curved surface with R = 150 mm were prepared, and each laminated sheet of Examples and Comparative Examples was adhered to these adherends, and each laminated sheet of Examples and Comparative Examples was evaluated according to the following evaluation criteria.

<Evaluation Criteria>

A: The laminated sheet was able to follow to the 10 mm step.
B: The laminated sheet was unable to follow to the 10 mm step, but was able to follow to the curved surface with R = 150 mm.
C: The laminated sheet was unable to follow to the 10 mm step and was also unable to follow to the curved surface with R = 150 mm.

The components of films for the transfer layer, films for the substrate, and resin layers used in Examples and Comparative Examples were as follows.

<Film for Transfer Layer>

Film A: polyethylene terephthalate film, "NS Separator MXA" manufactured by Nakamoto Packs Co., Ltd., thickness of 75 $\mu$m, with release treatment with a silicone-based release agent
Film B: polyethylene terephthalate film, "NS Separator MXA" manufactured by Nakamoto Packs Co., Ltd., thickness of 50 $\mu$m, with release treatment with a silicone-based release agent
Film C: polyethylene terephthalate film, "NS Separator MXA" manufactured by Nakamoto Packs Co., Ltd., thickness of 25 $\mu$m, with release treatment with a silicone-based release agent
Film D: polyethylene terephthalate film, "NS-38-F-100N" manufactured by Nakamoto Packs Co., Ltd., thickness of 38 $\mu$m, with release treatment with a silicone-based release agent
Film E: multilayer film of polypropylene/EVA/polypropylene, "Convenience Film PP Type Transparent" manufactured by OKAMOTO INDUSTRIES, INC., thickness of 100 $\mu$m, without release treatment
Film F: multilayer film of polypropylene/EVA/polypropylene, "Convenience Film PP Type Transparent" manufactured by OKAMOTO INDUSTRIES, INC., thickness of 300 $\mu$m, without release treatment
Film G: multilayer film of polyethylene/EVA/polyethylene, "Convenience Film PE Type Transparent" manufactured by OKAMOTO INDUSTRIES, INC., thickness of 100 $\mu$m, without release treatment
Film H: polyethylene terephthalate film, "Q2-ASI5" manufactured by Nippa Co., Ltd., thickness of 50 $\mu$m, with release treatment with a silicone-based release agent
Film I: polyethylene terephthalate film, "NM-ASI5" manufactured by Nippa Co., Ltd., thickness of 50 $\mu$m, with release treatment with a silicone-based release agent
Film J: unoriented polyethylene terephthalate film, amorphous, "A-PET-MXA" manufactured by Nakamoto Packs Co., Ltd., thickness of 100 $\mu$m, with release treatment with a silicone-based release agent
Film K: unoriented polyethylene terephthalate film, amorphous, "A-PET-MXA" manufactured by Nakamoto Packs Co., Ltd., thickness of 200 $\mu$m, with release treatment with a silicone-based release agent
Film L: polyethylene terephthalate film, "NS Separator MXA" manufactured by Nakamoto Packs Co., Ltd., thickness of 12 $\mu$m, with release treatment with a silicone-based release agent
Film M: unoriented polyethylene terephthalate film, amorphous, "A-PET-AU" manufactured by Nakamoto Packs Co., Ltd., thickness of 400 $\mu$m, with release treatment with a silicone-based release agent

<Film for Substrate Layer>

Polyethylene terephthalate film, "Q2-ASI5" manufactured by Nippa Co., Ltd., thickness of 50 $\mu$m, with release treatment with a silicone-based release agent

<Polymer Component>

Acrylic polyol resin (1): weight average molecular weight of 290000, hydroxyl value of 80 mgKOH/g, glass transition temperature of 20°C, solid content concentration (NV) = 30 mass% (solvent: ethyl acetate, etc.)
Acrylic polyol resin (2): weight average molecular weight of 250000, hydroxyl value of 80 mgKOH/g, glass transition temperature of 40°C, solid content concentration (NV) = 30 mass% (solvent: ethyl acetate, etc.)
Acrylic polyol resin (3): weight average molecular weight of 250000, hydroxyl value of 150 mgKOH/g, glass transition temperature of 40°C, solid content concentration (NV) = 30 mass% (solvent: ethyl acetate, etc.)

Acrylic polyol resin (4): weight average molecular weight of 260000, hydroxyl value of 110 mgKOH/g, glass transition temperature of 60°C, solid content concentration (NV) = 30 mass% (solvent: ethyl acetate, etc.)

Acrylic polyol resin (5): weight average molecular weight of 220000, hydroxyl value of 110 mgKOH/g, glass transition temperature of 80°C, solid content concentration (NV) = 25 mass% (solvent: ethyl acetate, etc.)

<Plasticized Resin>

Polycarbonate diol, average molecular weight of 500, "ETERNACOLL PH-50" manufactured by UBE Corporation, hydroxyl value of 224 mgKOH/mg, solid content concentration (NV) = 100 mass%

<Pigment (Colorant)>

"NSP-UP 841B" manufactured by NIKKO BICS CO., LTD., effective pigment concentration = 9 mass%, solid content concentration (NV) = 24 mass%

<Effect Pigment (Colorant)>

"Xirallic T60-10 WNT Crystal Silver" manufactured by Merck KGaA

<Thermally Reactive Isocyanate>

Hexamethylene diisocyanate-based blocked isocyanate (HDI type), blocking agent: 3,5-dimethylpyrazole (DMP), solid content concentration (NV) = 70%, solvent: ethyl acetate

Components used in the moisture-curable resin compositions were as follows.

Urethane prepolymer: trade name "Acryt 8PU-4015N", manufactured by Taisei Fine Chemical Co., Ltd., molecular weight of 50000

Polyisocyanate (1): trade name "Takenate D-140N", manufactured by Mitsui Chemicals, Inc., isophorone diisocyanate adduct, molecular weight of 640

Polyisocyanate (2): trade name "Desmodur N3200A", manufactured by Covestro AG, HDI biuret, molecular weight of 480

Pigment (colorant): "NSP-UP 841B" manufactured by NIKKO BICS CO., LTD., effective pigment concentration = 9 mass%, solid content concentration (NV) = 24 mass%

Brightener (colorant): "Xirallic T60-10 WNT Crystal Silver" manufactured by Merck KGaA

[Preparation of Thermosetting Resin Compositions A to G]

Coating materials of thermosetting resin compositions A to G were prepared by adding respective components in the proportions shown in Table 1, and further adding ethyl acetate as a solvent so that the solid content concentration could be 30% by mass.

[Preparation of Moisture-curable Resin Compositions H to J]

Coating materials of moisture-curable resin compositions H to J were prepared by adding respective components in the proportions shown in Table 5, and further adding ethyl acetate as a solvent so that the solid content concentration could be 30% by mass.

[Example 1]

After applying the thermosetting resin composition D onto the surface of the film B for a transfer layer with an applicator, the pre-drying process was carried out under conditions of a drying temperature of 60°C and a drying time of 20 minutes, followed by the main drying process performed under conditions of a drying temperature of 80°C and a drying time 5 minutes, and thus, a first resin layer having a thickness of 30 μm was formed on the transfer layer.

Next, after applying the thermosetting resin composition G onto the surface of the film for a substrate with an applicator, the pre-drying process was carried out under conditions of a drying temperature of 60°C and a drying time of 30 minutes, followed by the main drying process performed under conditions of a drying temperature of 80°C and a drying time 5 minutes, and thus, a second resin layer having a thickness of 30 μm was formed on the substrate.

By laminating the first resin layer formed on the transfer layer and the second resin layer formed on the substrate to each other at 25°C, a laminated sheet in which the transfer layer, the first resin layer, the second resin layer, and the substrate were successively laminated was obtained. The obtained laminated sheet was used for the above-described evaluations. The evaluation results are shown in Table 2.

[Examples 2 to 20 and Comparative Examples 1 to 4]

Except that the film for a transfer layer used for forming the transfer layer was changed as shown in Tables 2 to 4, and that the compositions of the thermosetting resin compositions and the moisture-curable resin compositions were changed as shown in Tables 1 and 5, the procedure was carried out in the same manner as in Example 1. The evaluation results are shown in Tables 2 to 4, and 6.

Table 1

| | | | Weight Average Molecular Weight | First Resin Layer | | | | | Second Resin Layer | |
|---|---|---|---|---|---|---|---|---|---|---|
| | | | | A | B | C | D | E | F | G |
| Thermosetting Resin Composition (parts by mass) | Acrylic Polyol Resin | Acrylic Polyol Resin (1) | 290000 | - | - | - | - | - | 52 | - |
| | | Acrylic Polyol Resin (2) | 250000 | - | - | - | - | - | - | 52 |
| | | Acrylic Polyol Resin (3) | 250000 | 55 | 42 | - | - | - | - | - |
| | | Acrylic Polyol Resin (4) | 260000 | - | - | 66 | 58 | - | - | - |
| | | Acrylic Polyol Resin (5) | 220000 | - | - | - | - | 64 | - | - |
| | Plasticized Resin | PH-50 | 500 | - | 11 | - | 6 | - | 13 | 13 |
| | Pigment | NSP-UP-841B | - | - | - | - | - | - | 3 | 3 |
| | Effect Pigment | Xirallic T60-10 WNT Crystal Silver | - | - | - | - | - | - | 3 | 3 |
| | Blocked Isocyanate Curing Agent | Hexamethylene Diisocyanate-based Blocked Isocyanate | - | 45 | 47 | 34 | 36 | 36 | 35 | 35 |

* Table 1 shows the amounts of the respective components in the thermosetting resin compositions A to G on a solid content basis, with the total solid content of the acrylic polymer component, the plasticized resin, and the thermally reactive isocyanate assumed as 100 parts by mass.

* The effective amount of the pigment is a value obtained by multiplying the value shown in Table 1 by 9/24.

Table 2

| | | Example 1 | Example 2 | Example 3 | Example 4 | Example 5 | Example 6 |
|---|---|---|---|---|---|---|---|
| Transfer Layer | Type of Film | Film B | Film C | Film C | Film C | Film C | Film C |
| | Thickness ($\mu$m) | 50 | 25 | 25 | 25 | 25 | 25 |
| | Bending Resistance (mm) | 68 | 32 | 32 | 32 | 32 | 32 |

(continued)

|  |  |  | Example 1 | Example 2 | Example 3 | Example 4 | Example 5 | Example 6 |
|---|---|---|---|---|---|---|---|---|
| Coating Layer | First Resin Layer | Thermosetting Resin Composition | D | D | B | C | E | A |
|  | Second Resin Layer | Thermosetting Resin Composition | G | G | G | G | G | G |
|  | Elastic Modulus (MPa) | | 159.0 | 159.0 | 10.8 | 254.5 | 550.7 | 211.6 |
| Evaluation | Residual Peeling Marks | | A | B | B | B | B | B |
|  | Application Property Evaluation | | A | A | A | A | A | A |
|  | Followability Evaluation | | A | A | A | A | A | A |

Table 3

|  |  |  | Example 7 | Example 8 | Example 9 | Example 10 | Example 11 | Example 12 |
|---|---|---|---|---|---|---|---|---|
| Transfer Layer | Type of Film | | Film D | Film E | Film F | Film G | Film H | Film I |
|  | Thickness ($\mu$m) | | 38 | 100 | 300 | 100 | 50 | 50 |
|  | Bending Resistance (mm) | | 58 | 61 | 94 | 42 | 79 | 65 |
| Coating Layer | First Resin Layer | Thermosetting Resin Composition | D | D | D | D | D | D |
|  | Second Resin Layer | Thermosetting Resin Composition | G | G | G | G | G | G |
|  | Elastic Modulus (MPa) | | 159.0 | 159.0 | 159.0 | 159.0 | 159.0 | 159.0 |
| Evaluation | Residual Peeling Marks | | B | A | B | B | A | A |
|  | Application Property Evaluation | | A | A | A | A | A | A |
|  | Followability Evaluation | | A | A | A | A | A | A |

Table 4

| | | | Example 13 | Example 14 | Example 15 | Example 16 | Example 17 | Comparative Example 1 | Comparative Example 2 |
|---|---|---|---|---|---|---|---|---|---|
| Transfer Layer | Type of Film | | Film A | Film A | Film J | Film K | Film B | Film L | Film M |
| | Thickness (μm) | | 75 | 75 | 100 | 200 | 50 | 12 | 400 |
| | Bending Resistance (mm) | | 95 | 95 | 81 | 117 | 68 | 10 | 150< |
| Coating Layer | First Resin Layer | Thermosetting Resin Composition | D | B | D | D | E | D | D |
| | Second Resin Layer | Thermosetting Resin Composition | G | F | G | G | - | G | G |
| | Elastic Modulus (MPa) | | 159.0 | 9.8 | 159.0 | 159.0 | 1200 | 159.0 | 159.0 |
| Evaluation | Residual Peeling Marks | | B | C | B | B | A | B | D |
| | Application Property Evaluation | | A | A | A | A | A | B | A |
| | Followability Evaluation | | A | A | A | B | B | A | C |

EP 4 786 203 A1

# EP 4 786 203 A1

Table 5

| | | Weight Average Molecular Weight | First Resin Layer | | Second Resin Layer |
|---|---|---|---|---|---|
| | | | H | I | J |
| Moisture-curable Resin Composition (solid content, parts by mass) | Urethan Polymer | 50000 | 70 | 80 | 80 |
| | Polyisocyanate (1) | 640 | | 20 | 20 |
| | Polyisocyanate (2) | 480 | 30 | | |
| | Pigment | - | - | - | 3 |
| | Effect Pigment | - | - | - | 3 |

* Table 1 shows the amounts of the respective components in the moisture-curable resin compositions H to J on a solid content basis, with the total solid content of the urethane prepolymer, the polyisocyanate (1), and the polyisocyanate (2) assumed as 100 parts by mass.

* The effective amount of the pigment is a value obtained by multiplying the value shown in Table 1 by 9/24.

Table 6

| | | | Example 18 | Example 19 | Example 20 | Comparative Example 3 | Comparative Example 4 |
|---|---|---|---|---|---|---|---|
| Transfer Layer | Type of Film | | Film B | Film C | Film C | Film L | Film M |
| | Thickness ($\mu$m) | | 50 | 25 | 25 | 12 | 400 |
| | Bending Resistance (mm) | | 68 | 32 | 32 | 10 | 150< |
| Coating Layer | First Resin Layer | Moisture-curable Resin Composition | H | H | I | H | H |
| | Second Resin Layer | Moisture-curable Resin Composition | J | J | - | J | J |
| | Elastic Modulus (MPa) | | 34.0 | 34.0 | 7.0 | 34.0 | 34.0 |
| Evaluation | Residual Peeling Marks | | B | B | C | B | D |
| | Application Property Evaluation | | A | A | A | B | A |
| | Followability Evaluation | | A | A | A | A | C |

From a comparison of Examples 1 to 20 with Comparative Examples 1 to 4, it was found that when the bending resistance of the transfer layer is in the range of 20 to 120 mm, peeling marks remaining on the coating layer can be suppressed when the transfer layer is peeled off and the coating layer is transferred to an adherend. Furthermore, it was also found that when the bending resistance of the transfer layer is 20 to 120 mm, formation of wrinkles in the laminated sheet can be suppressed when the laminated sheet is adhered to an adherend.

Reference Signs List

1, 1A to 1C      laminated sheet
10      transfer layer
20, 20A, 20B      coating layer
21      first resin layer

22          second resin layer
23          another resin layer
30          substrate

**Claims**

1.  A laminated sheet comprising a transfer layer, and a coating layer formed of a thermosetting resin composition or a moisture-curable resin composition, bending resistance of the coating layer being 20 to 120 mm.

2.  The laminated sheet according to claim 1, wherein an elastic modulus of the coating layer measured from the transfer layer side is 1.0 to 1500 MPa.

3.  The laminated sheet according to claim 1 or 2, wherein the thermosetting resin composition contains a polymer component having a functional group reactive with an isocyanate group, and a thermally reactive isocyanate.

4.  The laminated sheet according to claim 3, wherein the polymer component having a functional group reactive with an isocyanate group has a hydroxyl group.

5.  The thermosetting resin sheet according to claim 3 or 4, wherein the polymer component having a functional group reactive with an isocyanate group is at least one resin selected from the group consisting of a (meth)acrylic resin, a polycarbonate resin, a polyester resin, and an epoxy resin.

6.  The laminated sheet according to any one of claims 3 to 5, wherein a weight average molecular weight of the polymer component having a functional group reactive with an isocyanate group is 50000 or more and 1000000 or less.

7.  The laminated sheet according to any one of claims 3 to 6, wherein a content of the polymer component having a functional group reactive with an isocyanate group in the thermosetting resin composition is 20% by mass or more and 90% by mass or less.

8.  The laminated sheet according to any one of claims 1 to 7,

    wherein the coating layer has a first resin layer formed of a first thermosetting resin composition, and a second resin layer formed of a second thermosetting resin composition,
    the first thermosetting resin composition contains a first polymer component having a functional group reactive with an isocyanate group, and a first thermally reactive isocyanate, and
    the second thermosetting resin composition contains a second polymer component having a functional group reactive with an isocyanate group, a second thermally reactive isocyanate, and a colorant.

9.  The laminated sheet according to claim 8, wherein a content of the first thermally reactive isocyanate in the thermosetting resin composition is 10% by mass or more and 70% by mass or less.

10. The laminated sheet according to claim 1, wherein the moisture-curable resin composition contains a resin containing an isocyanate group.

11. The laminated sheet according to claim 1 or 10, wherein the moisture-curable resin composition contains a polymer having a weight average molecular weight of 20000 or more and 1000000 or less.

12. The laminated sheet according to any one of claims 1 to 11, wherein a thickness of the transfer layer is 10 $\mu$m or more and 1000 $\mu$m or less.

13. A vehicle coated by using the laminated sheet according to any one of claims 1 to 12.

14. A method of using a laminated sheet, wherein the laminated sheet according to any one of claims 1 to 12 is used to be adhered to an adherend.

15. A method for producing a laminated sheet in which a coating layer is formed of a thermosetting resin composition, and the coating layer has a first resin layer and a second resin layer, the method comprising:

applying, to a transfer layer, a first coating material comprising a first thermosetting resin composition containing a first polymer component and a thermally reactive isocyanate, and drying the coating material to prepare a first laminate including the transfer layer, and the first resin layer formed of the first thermosetting resin composition that is provided on the transfer layer;

applying, to a substrate, a second coating material comprising a second thermosetting resin composition containing a second polymer component, a second thermally reactive isocyanate, and a colorant, and drying the coating material to prepare a second laminate including the substrate, and the second resin layer formed of the second thermosetting resin composition that is provided on the substrate; and

laminating the first laminate and the second laminate to each other in such a manner that the first resin layer and the second resin layer face each other.

## Fig. 1

## Fig. 2

## Fig. 3

Fig. 4

## INTERNATIONAL SEARCH REPORT

| International application No. |
|---|
| **PCT/JP2024/034843** |

### A. CLASSIFICATION OF SUBJECT MATTER

**B44C 1/165**(2006.01)i; **B32B 7/022**(2019.01)i; **B32B 27/40**(2006.01)i; **C08J 7/04**(2020.01)i
FI:  B44C1/165 F; B32B27/40; C08J7/04 CEZ; B32B7/022

According to International Patent Classification (IPC) or to both national classification and IPC

### B. FIELDS SEARCHED

Minimum documentation searched (classification system followed by classification symbols)

B44C1/165; B32B7/022; B32B27/40; C08J7/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 01-154741 A (SEKISUI CHEMICAL CO., LTD.) 16 June 1989 (1989-06-16) claims, examples | 1-9, 12-15 |
| Y | | 1-9, 12-15 |
| Y | JP 2000-071602 A (CANON KABUSHIKI KAISHA) 07 March 2000 (2000-03-07) claims, examples | 1-15 |
| Y | JP 2000-158892 A (DAI NIPPON PRINTING CO., LTD.) 13 June 2000 (2000-06-13) paragraph [0007] | 2 |
| Y | JP 04-011680 A (SEKISUI CHEMICAL CO., LTD.) 16 January 1992 (1992-01-16) claims, examples | 1-7, 12-14 |
| X | WO 2024/058166 A1 (SEKISUI CHEMICAL CO., LTD.) 21 March 2024 (2024-03-21) claims | 1-2, 10-14 |
| Y | | 1-2, 10-14 |

☐ Further documents are listed in the continuation of Box C.   ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 November 2024** | **10 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2024/034843** |

**Box No. III    Observations where unity of invention is lacking (Continuation of item 3 of first sheet)**

This International Searching Authority found multiple inventions in this international application, as follows:

Document 1: JP 01-154741 (SEKISUI CHEMICAL CO., LTD.) 16 June 1989 (1989-06-16), claims, examples
Document 2: JP 2000-071602 A (CANON KABUSHIKI KAISHA) 07 March 2000 (2000-03-07), claims, examples
Document 3: JP 2000-158892 A (DAI NIPPON PRINTING CO., LTD.) 13 June 2000 (2000-06-13), paragraph [0007]
Document 4: JP 04-011680 (SEKISUI CHEMICAL CO., LTD.) 16 January 1992 (1992-01-16), claims, examples

The invention in claim 1 recites two alternatives. The invention understood on the basis of the alternative "heat-curing resin composition" is referred to as "the invention in claim 1(1)" out of convenience, and the invention understood on the basis of the alternative "moisture-curing resin compositions" is referred to as "the invention in claim 1(2)" out of convenience.

The claims are classified into the following three inventions.

Invention 1: Claims 1(1), 2-9, and 12-14
    Claim 1(1) lacks novelty in light of document 1 or is simply the addition or the like of a well-known feature to the invention disclosed in document 1, and thus does not have a special technical feature.
    Accordingly, claims 1(1), 2-9, and 12-14 are classified as invention 1.

Invention 2: Claims 1(2) and 10-11
    Claim 1(2) shares with invention 1 the technical feature of a "laminated sheet having a transfer layer and a paint layer comprising a resin composition, wherein the bending stiffness of the transfer layer is 20-120 mm".
    However, this technical feature does not make a contribution over the prior art in light of the content disclosed in documents 1 and 2, and thus cannot be considered a special technical feature. Moreover, there is no other same or corresponding special technical feature between these inventions.
    Furthermore, claim 1(2) does not depend from any of the claims classified as invention 1. Claim 1(2) is also not substantially identical to or similarly closely related to any of the claims classified as invention 1.
    Accordingly, claim 1(2) cannot be classified as invention 1.
    Therefore, claim 1(2) and claims 10-11 are classified as invention 2.

Invention 3: Claim 15
    Claim 15 shares with inventions 1 and 2 the technical feature of a "laminated sheet having a transfer layer and a paint layer comprising a resin composition".
    However, this technical feature does not make a contribution over the prior art in light of the content disclosed in documents 1-4, and thus cannot be considered a special technical feature. Moreover, there is no other same or corresponding special technical feature among these inventions.
    Furthermore, claim 15 does not depend from any of the claims classified as invention 1 or 2.
    Claim 15 is also not substantially identical to or similarly closely related to any of the claims classified as invention 1 or 2.
    Accordingly, claim 15 cannot be classified as invention 1 or 2.
    Therefore, claim 15 is classified as invention 3.

Form PCT/ISA/210 (continuation of first sheet) (July 2022)

## INTERNATIONAL SEARCH REPORT

| International application No. |
| --- |
| **PCT/JP2024/034843** |

**Box No. III      Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/034843**

| Patent document cited in search report | | | Publication date (day/month/year) | Patent family member(s) | Publication date (day/month/year) |
|---|---|---|---|---|---|
| JP | 01-154741 | A | 16 June 1989 | (Family: none) | |
| JP | 2000-071602 | A | 07 March 2000 | (Family: none) | |
| JP | 2000-158892 | A | 13 June 2000 | (Family: none) | |
| JP | 04-011680 | A | 16 January 1992 | (Family: none) | |
| WO | 2024/058166 | A1 | 21 March 2024 | (Family: none) | |

Form PCT/ISA/210 (patent family annex) (July 2022)

**REFERENCES CITED IN THE DESCRIPTION**

**Patent documents cited in the description**

- JP 4011680 A